# EUROPÄISCHE PATENTANMELDUNG

(11) **EP 4 303 807 A1**
(43) Veröffentlichungstag der Anmeldung: **10.01.2024**
(21) Anmeldenummer: 22182954.2
(22) Anmeldetag: 05.07.2022
(51) Int. Cl.: G06T 7/00, G06T 7/90

(54) **VERFAHREN, MESS-SYSTEM UND COMPUTERPROGRAMMPRODUKT ZUR FARBPRÜFUNG**

(71) Anmelder: Lapp Engineering AG, 6330 Cham (CH)
(72) Erfinder: Liller, Markus, 70565 Stuttgart (DE)
(74) Vertreter: Schmidt, Steffen J.

(57) **Zusammenfassung**

Ein computer-implementiertes Verfahren zur Farbqualitätsprüfung von Werkstücken umfasst, zum Beispiel in folgender Reihenfolge, die Schritte:
Ermitteln eines Satzes von Farbwerten an der Oberfläche eines Werkstückes, basierend auf mittels eines Farbsensorsystems erfassten Rohdaten von der Oberfläche eines Werkstückes, wobei eine Farbdatenerfassung der erfassten Rohdaten hierbei einer Prüfsituation unterliegt, welche Einflussgrößen auf die Farbdatengewinnung mittels des Farbsensorsystems repräsentiert; Speichern des Satzes der ermittelten Farbwerte in einem Datenspeicher, wobei dem Satz der Farbwerte die Prüfsituation zugeordnet ist; Klassifizieren des gespeicherten Satzes der Farbwerte mittels eines trainierten Klassifikators der zugehörigen Prüfsituation in mehrere disjunkte Qualitätsklassen, wobei der Klassifikator mittels Trainingsdaten trainiert wurde, um ein Klassifikationsmodell zu bilden, in dem zu bewertende Farbwerte im Verhältnis zu vorgegebenen Farbwerten einer von mehreren vordefinierten Klassen zugeordnet sind.

## Beschreibung

### Hintergrund

Ein Verfahren und insbesondere ein computer-implementiertes Verfahren dient zur Farbprüfung von Werkstücken, zum Beispiel von mit farbigem Kunststoff ummantelten Kabeln und Leitungsadern; ein entsprechendes Mess-System sowie ein entsprechendes Computerprogrammprodukt dienen ebenfalls zur Ausführung der Farbqualitätsprüfung.

Hersteller von mit farbigem Kunststoff ummantelten Kabeln, Drähten und einadrigen Leitungsadern (Leitungen) unterliegen immer höheren Qualitätsanforderungen in Bezug auf die Farbtreue der an ihre Kunden ausgelieferten Leitungen. Dies erfordert eine Überprüfung des Farbtons entweder vor dem Anbringen des farbigen Kunststoffs um das Leitungsmaterial (zum Beispiel Kupferlitze oder Kupferader) zum Beispiel durch Extrusion, oder nach dem Anbringen des farbigen Kunststoffs um das Leitungsmaterial im Rahmen der Qualitätskontrolle.

Insbesondere bei Oberflächenmesstechniken ergeben sich aus verschiedenen Gründen Probleme bei einer Vergleichbarkeit von Messergebnissen verschiedener Prüfsituationen, also zum Beispiel unterschiedlicher Mess- bzw. Produktionsorte.

Hohe Qualitätsanforderungen, ungünstige Umgebungsbedingungen (schwankende Umweltparameter, etc.) und/oder störanfällige Messgeräte führen dazu, dass bei dem zu erbringenden Nachweis der Messfähigkeit die ungünstigste Prüfsituation betrachtet wird. Dies führt häufig zu hohen Toleranzausnutzungen. Die Entscheidung, ob eine geprüfte Leitung, ein geprüftes Werkstück, das nah an einer Toleranzgrenze liegt, innerhalb oder außerhalb der Toleranz liegt, kann nicht immer mit hoher Verlässlichkeit, mit begrenztem Aufwand und zu vertretbaren Kosten getroffen werden.

Eine konkrete Prüfsituation ist eine Kombination aus Standort, Messverfahren und Sensor. Die Vergleichbarkeit der Ergebnisse bezüglich der Produktionsüberwachung wird dann eingeschränkt, wenn mehrere Prüfsituationen parallel verwendet werden. Die Gründe dafür sind, dass verschiedene Standorte unterschiedliche Umgebungsbedingungen haben, unterschiedliche Messmethoden, unterschiedliche mechanische Eigenschaften aufweisen und verschiedene Sensortechnologien (selbst wenn die gleichen Messgrößen erfasst werden) unterschiedliche Effekte, d.h. Messergebnisse, zeigen.

Optische Messungen an Oberflächen können Reflexe erzeugen, Linien- und Flächensensoren können verschiedene Eigenschaften bewerten, die Lichtverhältnisse in produktionsnahen Umgebungen schwanken über den Tagesverlauf, etc.

Für eine echte Vergleichbarkeit müssen diese Effekte gefiltert, kompensiert und/oder korrigiert werden, was aufwändig, oft unzureichend und kostspielig ist. Außerdem müssen tolerierbare Oberflächendefekte wie zum Beispiel Poren gefiltert werden.

Die Auswahl des passenden Mess-Systems für Oberflächen-/ Farbprüfungen sowie deren Toleranzen ist ein schwieriger und aufwändiger Prozess, der üblicherweise im Entwicklungs- und Konstruktionsprozess durchgeführt wird. Nicht selten werden dabei Gegebenheiten in der Produktion und funktionale Eigenschaften nicht ausführlich berücksichtigt.

Derzeit wird der Farbton einer Leitung meist nicht gemessen, sondern visuell von Werkern, ggf. unter Verwendung von Vergleichsfarbtafeln, beurteilt. Diese subjektive Beurteilung des Farbtons hat in erheblichem Umfang Kundenreklamationen zur Folge, da bei den Kunden ebenfalls unter oft subjektiven Kontrollbedingungen der Farbton inspiziert wird. Unterschiedliche Umwelteinflüsse (z. B. Temperatur des Werkstücks, Temperatur der Umgebung, Farbtemperatur der Lichtquelle, Schatten) in der Prüfsituation erschweren reproduzierbare und vergleichbare Ergebnisse. Spektralphotometer können zwar eine Farbe messen, sind aber für fertige Einzeldrähte mit sehr kleinen Querschnitten (zum Beispiel 0,5 mm²) ungeeignet und sehr kostspielig.

Qualitätsmaßstäbe einzuhalten, auch wenn die Produktion mit entsprechenden Messsystemen an unterschiedlichen Orten unter unterschiedlichen Umwelteinflüssen und ggfs. auch unterschiedlichen Mess-Systemen stattfindet, ist eine große Herausforderung.

Die DE 10 2013 10 99 15 A1 betrifft ein Verfahren zur Überprüfung eines Inspektionssystems zur Erkennung von Oberflächendefekten eines Produkts, vorzugsweise Stahlflachprodukts, bei dem eine Digitalkamera eine Aufnahme einer Oberfläche des Produkts erzeugt, bei dem die Aufnahme an eine Bildverarbeitungseinrichtung übergeben wird, bei dem eine digitalisierte Darstellung eines Oberflächendefekts in die digitalisierte Aufnahme integriert wird, bei dem die Bildverarbeitungseinrichtung anhand der digitalisierten Aufnahme inklusive der digitalisierten Darstellung eines Oberflächendefekts eine Fehlererkennung durchführt, und bei dem ermittelt wird, ob die Bildverarbeitungseinrichtung die digitalisierte Darstellung eines Oberflächendefekts als Fehler der inspizierten Oberfläche erkennt. Die Informationen betreffend einen von der Bildverarbeitungseinrichtung erkannten Fehler werden an eine Klassifizierungseinrichtung weitergegeben, welche die Fehler nach vorgegebenen Kriterien klassifiziert.

Es kann beispielsweise eine Unterteilung erfolgen, ob es sich bei dem Fehler um einen Kratzer, eine Delle, eine Erhebung, einen Oberflächenaufbruch, eine Oxidation, eine Schliere, eine Verschmutzung und/oder einen Fremdkörper handelt.

### Aufgabe

Eine von der Prüfsituation unabhängigere Farbqualitätsprüfung von Werkstücken, zum Beispiel von mit farbigem Kunststoff ummantelten Leitungen, die auch dazu beitragen kann, Kundenreklamationen zu vermeiden und die Ausschussrate zu verringern.

### Lösung

Diese Aufgabe wird durch das hier vorgeschlagene Verfahren, das entsprechende System und das zugehörige Computerprogrammprodukt entsprechend den unabhängigen Ansprüchen gelöst. Weitere Ausgestaltungen werden in den abhängigen Ansprüchen definiert.

Hier sind Konventionen, Begriffe und/oder Ausdrücke folgendermaßen verstanden:
"Werkstück", "Objekt", "Probe" "Leitung" beschreibt ein Produkt aus einer Fertigungslinie, welches auf seine Oberflächengüte, insbesondere Farbe geprüft werden soll. Der hierfür maschinell unterstützte Prüfungsprozess wird als "Farbprüfung" bezeichnet und beschreibt den Einsatz von Oberflächensensoren und eine Auswertung von aufgenommenen Messdaten.

"Rohdaten" beschreibt die Daten, die direkt von dem Farbsensorsystem aufgenommen werden, ohne interpretiert oder weiterverarbeitet worden zu sein.

"Prüfsituation" beschreibt Umgebungsvariablen der Messung der Oberflächenqualität, wie beispielsweise die vorherrschende Temperatur, die vorherrschende Luftfeuchtigkeit, Datum / Tageszeit, genutzte Farb-Sensoren, Standort, etc. Insgesamt handelt es sich um Metadaten für die Farbprüfung, d.h. Daten über die Rohdaten, bzw. unter welchen Umständen diese und auch daraus abgeleitete Werte entstanden sind. Dabei wird z.B. zwischen Prüfsituationen unterschieden, die zwar an einem gleichen Fertigungsstandort anzutreffen sind, die sich aber beispielsweise dadurch unterscheiden, dass es sich bei der einen Prüfsituation um den Inline-Prüfprozess handelt, während es sich bei einer zweiten Prüfsituation um eine - potentiell genauere - offline Nachmessung in einem Prüfraum handelt.

"Klassifikator" - im Kontext des maschinellen Lernens (machine learning) auch als Classifier oder Klassifikationssystem bezeichnet - beschreibt ein Machine-Learning basierendes System, welches durch ein Training mit Trainingsdaten in die Lage versetzt wird, Eingangsdaten - hier insbesondere Bilddaten von aufgenommenen Proben (ggf. auch mindestens eines Teils eines Hintergrunds) -, Merkmale der Probe und/oder auch eines Zusammenwirkens der Probe mit dem Hintergrund einer bestimmten Klasse (insbesondere einer vorherbestimmten Farbklasse) zuzuordnen. Ein Klassifikator klassifiziert Eingangsdaten typischerweise in eine vorgegebene Anzahl von Klassen. Dies geschieht normalerweise dadurch, dass ein Klassifikationswert der Eingabedaten für jede Klasse bestimmt wird und ein WTA-Filter (winner takes it all) die Klasse mit dem höchsten Klassifikationswert als die klassifizierte Klasse auswählt. Klassifikatoren nutzen die Abweichung zu einem 100%-Klassifikationswert häufig als Qualitätsparameter der Klassifikation oder als Wahrscheinlichkeit für die Richtigkeit der Klassifikation (Confidence). Bei unklaren Klassifikationsergebnissen kann das Auswahlsystem eine Fehlermeldung erzeugen, wenn beispielsweise der Unterschied zwischen der wahrscheinlichsten Klasse und der nächstwahrscheinlichen Klasse unterhalb eines vordefinierten Schwellenwertes liegt (z.B. 30%).

"Klassifizieren" beschreibt hier zunächst den Prozess des Zuordnens eines Farbwertes zu unterschiedlichen Klassen, in die sie eingeteilt werden; z.B. eine Einteilung in eine A-Klasse, eine B-Klasse und eine C-Klasse je nachdem, für welche dieser Klassen der zugehörige Konfidenzwert, Vertrauensniveau am höchsten ist. Darüber hinaus kann auch festgelegt sein, dass ein Mindestabstand (z.B. Differenzwert) zwischen dem Klassifikationsergebnis - d.h. einem Konfidenzwert - und dem nächstniedrigeren Klassifikationsergebnis - d.h. anderen Konfidenzwert - gegeben sein muss (z.B. 50% oder 60%), damit eine eindeutige Klassifikation möglich ist.

Der Konfidenzwert kann - wie in einer weiter unten beschriebenen alternativen Ausführungsform - auch genutzt werden, um statt in drei Klassen zu klassifizieren (zum Beispiel "A", "B", "C"), nur zwei Klassen vorzugeben, in die klassifiziert werden soll. Der Konfidenzwert kann dazu genutzt werden, um Unsicherheiten bei den Klassifikationen zu adressieren, z.B. durch eine zweite Messung und Beurteilung. Wenn also der Konfidenzwert für eine Klassifikation in die Gut-Klasse z.B. 80% oder höher ist, könnte das Werkstück gleich einer Farbe entsprechend eingestuft werden. Bei 20% für die Gut-Klasse, was 80% für die Schlecht-Klasse bedeutet, kann das Werkstück umgehend als den Farbkriterien nicht entsprechend eingestuft werden. Natürlich sind andere Prozentwerte jederzeit nutzbar. Der Bereich dazwischen kann dann als fraglich angesehen werden (äquivalent einer Unentschieden-Klasse) und eine Nachuntersuchung kann veranlasst werden.

"Maschinelles Lernen" beschreibt eine Grundfunktion der künstlichen Intelligenz, wobei z.B. statistische Verfahren verwendet werden, um Computersystemen die Fähigkeit des "Lernens" zu geben. Beispielsweise werden dabei bestimmte Verhaltensmuster innerhalb eines spezifischen Aufgabenbereiches optimiert. Die verwendeten Verfahren versetzen trainierte Systeme des maschinellen Lernens in die Lage, Daten zu analysieren, ohne dass es dazu einer expliziten prozeduralen Programmierung bedarf. Typischerweise handelt es sich z.B. bei einem NN (neuronales Netz) oder CNN (Convolutional Neural Network) um ein Beispiel für ein System für maschinelles Lernen, um ein Netz von Knoten zu bilden, welche als künstliche Neuronen agieren, und um künstliche Verbindungen zwischen den künstlichen Neuronen - sogenannte Links - wobei den künstlichen Verbindungen Parameter - zum Beispiel Gewichtsparameter für die Verbindung - zugeordnet werden können. Während des Trainings des neuronalen Netzes passen sich die Gewichtsparameterwerte der Verbindungen automatisch auf Basis von Eingangssignalen zur Erzeugung eines gewünschten Ergebnisses an. Beim überwachten Lernen werden die als Eingabewerte (Trainingsdaten) gelieferten bzw. gemessenen Rohdaten - allgemein (Eingangs-)Daten - durch gewünschte Ausgabedaten (Annotationen) ergänzt, um einen gewünschten Ausgabewert (gewünschte Klasse) zu erzeugen. So wird eine Abbildung von Eingangsdaten auf Ausgangsdaten gelernt. Typische bekannte Klassifikatorsysteme nutzen die Eigenschaften der folgenden Prinzipien: neuronales Netz, tiefes neuronales Netz, faltendes neuronales Netz, k-nächster Nachbar, Stützvektormaschine, Entscheidungsbaum, Random Forest, Boosting, Gradient Boosting, und Gaussian Process, Bayes, Multilayer-Perceptron, rückgekoppeltes neuronales Netz, Long-/Short-term Memory Network, oder eine Kombination aus mindestens zwei der genannten Beispiele.

"Trainieren des Klassifikators" beschreibt hier, dass z.B. ein Machine-Learning-System (maschinelles Lernsystem) durch eine Mehrzahl von Sätzen von Beispieldaten - z.B. Bildeinzüge des Farbsensorsystems - in einem beispielsweise neuronalen Netz durch teilweise wiederholtes Auswerten der Beispieldaten so justiert wird, um nach der Trainingsphase auch unbekannte Farbwerte einer oder mehreren Klassen zuzuordnen, mit denen das Lernsystem trainiert worden ist. Die Beispieldaten sind typischerweise annotiert - d.h. mit Metadaten versehen - um basierend auf dem Farbwert gewünschte Ergebnisse, also die Zuordnung zu einer der Klassen, zu erzeugen.

Die Trainingsdaten - Bildeinzüge von In-Ordnung-, Nicht-In-Ordnung- und Gold-Standard-Muster-Leitungen - werden entsprechend dem gewählten Modell und der Anzahl der Klassen zur Verfügung gestellt.

"Convolutional Neural Network" beschreibt eine Klasse von künstlichen neuronalen Netzen, die auf Feed-Forward-Techniken basieren. Sie werden häufig für Bildanalysen mit Bildern bzw. deren Pixeln als Eingangsdaten eingesetzt. Sie eignen sich auch gut, wenn "Quasi-Pixel" aus Oberflächendaten oder andere Werte - hier die Farbwerte - verarbeitet werden sollen. Hauptbestandteile von Convolutional Neural Networks sind dabei Faltungsschichten, welche eine effiziente Auswertung durch Parameter-Sharing ermöglichen. Typischerweise wird jeder Pixel des aufgenommenen Bildes einem künstlichen Neuron des neuronalen Netzes als Eingangswert zugewiesen.

"Tiefe neuronale Netze" umfassen mehrere Schichten unterschiedlicher Funktionen - beispielsweise eine Eingangsschicht, eine Ausgangsschicht und eine oder mehrere dazwischen liegende Schichten, beispielsweise für Faltungsoperationen, Anwendung von nichtlinearen Funktionen, einer Dimensionsreduktion, Normalisierungsfunktionen, etc. Die Funktionen können "in Software ausgeführt" werden oder es können spezielle Hardware-Baugruppen die Berechnung der jeweiligen Funktionswerte übernehmen. Darüber hinaus sind Kombinationen von Hardware- und Softwareelementen einzusetzen.

"Qualitätsklassen" beschreibt die Klassen - im Sinne des Klassifikators -, in die der Klassifikator die ermittelten Farbwerte klassifiziert. Dabei wird hier zwischen mehreren, zum Beispiel drei "A-, B-, und C-Klassen", unterschieden. Eine Zuordnung in eine A-Klasse bestätigt, dass die vorgenommene Oberflächenqualitätsprüfung einer vorgegebenen Qualität genügt, während dies bei einer C-Klasse nicht der Fall ist. Es kann auch zwischen mehreren A- bzw. C-Klassen unterschieden werden, weil die zugehörige Oberflächenqualitätsprüfung mit jeweils unterschiedlichen Prüfsituationen durchgeführt worden sein kann. Kann der Klassifikator keine eindeutige Klassifikation vornehmen, weil z.B. der Confidence-Level (vorbestimmt) nicht ausreicht, kann der Klassifikator auch in eine Unentschieden-Klasse klassifizieren.

Ein hier vorgestelltes computer-implementiertes Verfahren zur Farbqualitätsprüfung von Werkstücken umfasst, zum Beispiel in folgender Reihenfolge, die Schritte:
- Ermitteln eines Satzes von Farbwerten an der Oberfläche eines Werkstückes, basierend auf mittels eines Farbsensorsystems erfassten Rohdaten von der Oberfläche eines Werkstückes, wobei eine Farbdatenerfassung der erfassten Rohdaten hierbei einer Prüfsituation unterliegt, welche Einflussgrößen auf die Farbdatengewinnung mittels des Farbsensorsystems repräsentiert;
- Speichern des Satzes der ermittelten Farbwerte in einem Datenspeicher, wobei dem Satz der Farbwerte die Prüfsituation zugeordnet ist;
- Klassifizieren des gespeicherten Satzes der Farbwerte mittels eines trainierten Klassifikators der zugehörigen Prüfsituation in mehrere disjunkte Qualitätsklassen, wobei der Klassifikator mittels Trainingsdaten trainiert wurde, um ein Klassifikationsmodell zu bilden, in dem zu bewertende Farbwerte im Verhältnis zu vorgegebenen Farbwerten einer von einer Mehrzahl vordefinierter Klassen zugeordnet sind.

Ein Einordnen der zu bewertenden Farbwerte in eine A-, B-, oder C-Klasse kann erfolgen in Abhängigkeit einer Entfernung E des Satzes von einem ersten und/oder einem zweiten Schwellenwert S1, S2 relativ zu einem der vorgegebenen Farbwerte, wobei gilt:
Einordnung in A-Klasse: E < S1;
Einordnung in B-Klasse: S1 < E < S2; und
Einordnung in C-Klasse: E > S2.

Die Entfernung E ist der Abstand zweier Farben in einem Farbenraum. Die Entfernung E wird aus den Koordinaten zweier Farbstandorte in dem Farbenraum ermittelt. Damit können Unterschiede zwischen zwei Farben, die durch die menschliche Wahrnehmung empfunden, oder eben nicht mehr empfunden werden, mit numerischen Werten versehen werden.

Ein Satz der Farbwerte, die das Farbsensorsystem erfasst, ist in einer Variante eine einzelne Stelle auf dem Werkstück, die eine Farbe oder mehrere Farben aufweist, die durch einen Farbstandort in dem Farbenraum wiedergegeben werden. Eine Stelle kann dabei ein Punkt, eine Linie oder eine Fläche der Überfläche des Werkstücks sein. Ein Satz der Farbwerte gibt in einer Variante eine einzelne Stelle in mehreren gleichzeitig oder zeitlich nacheinander gewonnenen Bildeinzügen wieder. Ein Satz der Farbwerte ist in einer Variante ein gemittelter Wert oder ein Extremwert einer Stelle in einem oder mehreren gleichzeitig oder zeitlich nacheinander gewonnenen Bildeinzügen wiedergeben.

Der erste Schwellenwert S1 kann so gewählt sein, dass die Entfernung E des Satzes von dem ersten Schwellenwert S1 zu einem jeweiligen der vorgegebenen Farbwerte so gering ist, so dass der Unterschied durch das menschliche Auge nicht erkennbar ist; der erste und der zweite Schwellenwert S2 können so gewählt sein, dass die Entfernung E des Satzes zu einem jeweiligen der vorgegebenen Farbwerte größer als der erste Schwellenwert S1, aber kleiner als der zweite Schwellenwert S2 ist, so dass der Unterschied durch das menschliche Auge nahezu nicht erkennbar ist, aber anhand der Trainingsdaten erkennbar ist; der zweite Schwellenwert S2 kann so gewählt sein, dass die Entfernung E des Satzes zu einem jeweiligen der vorgegebenen Farbwerte größer als der zweite Schwellenwert S2 ist, so dass der Unterschied durch das menschliche Auge gut erkennbar ist.

Der Klassifikator ist ausgewählt aus der Gruppe umfassend neuronales Netz, tiefes neuronales Netz, faltendes neuronales Netz, k-nächster Nachbar, Stützvektormaschine, Entscheidungsbaum, Random Forest, Boosting, Gradient Boosting, und Gaussian Process, Bayes, Multilayer-Perceptron, rückgekoppeltes neuronales Netz, Long-/Short-term Memory Network, oder eine Kombination aus mindestens zwei der genannten Beispiele.

Der Klassifikator kann vorab dazu konfiguriert sein, Farben von Objekten, zum Beispiel Leitungen basierend auf den Sensordaten zu schätzen. Falls der Klassifikator ein künstliches neuronales Netz ist, können die Abweichungen beispielsweise dazu verwendet werden, Gewichtungen von Neuronenverbindungen des Netzes durch Backpropagation schrittweise zu korrigieren, d. h. das Netz in einem überwachten Lernverfahren zu trainieren. Dabei werden die Abweichungen, d. h. die Fehler des Netzes, von einer Ausgabeschicht des Netzes zurück zu einer Eingabeschicht des Netzes propagiert und die Gewichtungen abhängig von ihrem jeweiligen Einfluss auf die Fehler so geändert, dass eine Ausgabe des Netzes in einem späteren Zeitschritt näher an einer gewünschten Ausgabe liegt als in einem aktuellen Zeitschritt.

Das Farbsensorsystem kann einen optischen Sensor aufweisen, der dazu bestimmt und eingerichtet ist, ein- oder zweidimensionale Rohdaten aufzunehmen.

Zur Schätzung einer Werkstückfarbe können Daten eines oder mehrerer Sensoren gleicher oder unterschiedlicher Art, etwa einer Kamera, verarbeitet werden. Bei der Schätzung der Werkstückfarbe können Unsicherheiten oder Ungenauigkeiten bezüglich der Messungen sowie Falsch- und Fehldetektionen berücksichtigt werden.

Die Rohdaten umfassen optisch ermittelte Punkt-, Linien- oder Flächenparameter und gehen in den Satz der Farbwerte ein. Ein Satz der Farbwerte, die das Farbsensorsystem erfasst, ist in einer Variante eine einzelne Stelle auf dem Werkstück, die eine Farbe oder mehrere Farben aufweist, die durch einen Farbstandort in dem Farbenraum wiedergegeben werden. Eine Stelle kann dabei ein Punkt, eine Linie oder eine Fläche der Überfläche des Werkstücks sein. Ein Satz der Farbwerte gibt in einer Variante eine einzelne Stelle in mehreren gleichzeitig oder zeitlich nacheinander gewonnenen Bildeinzügen wieder. Ein Satz der Farbwerte ist in einer Variante ein gemittelter Wert oder ein Extremwert einer Stelle in einem mehreren gleichzeitig oder zeitlich nacheinander gewonnenen Bildeinzügen wiedergeben.

Umgebungsparameter einer Prüfsituation umfassen einen Standort und Eigenschaften (Auflösung, Farbspektrum und Farbtiefe) des Farbsensorsystems, Temperatur des Werkstücks und der Umgebung, Luftfeuchtigkeit, Messgeschwindigkeit.

Das computer-implementierte Verfahren zur Farbprüfung von Werkstücken weist mehrere Vorteile und technische Effekte auf, die auch analog für das zugehörige System gelten:
Die vorgeschlagenen Lösungen adressieren grundsätzliche Probleme bei Farbmessungen, bei denen Messdaten von mehr als einer Dimension ausgewertet werden und bei denen MessErgebnisse unterschiedlicher Prüfsituationen schlecht miteinander vergleichbar sind.

Zu hohe Toleranzausnutzungen bedingt durch unterschiedliche Standorte zur Produktion gleicher Werkstücke, die durch unterschiedliche Prüfsituationen gekennzeichnet sind, ist nicht mehr erforderlich. Vielmehr kann anhand der vorgeschlagenen Lösungen einfacher und reproduzierbarer ermittelt werden, ob zum Beispiel eine untersuchte Leitung, die nah an einer Toleranzgrenze liegt, tatsächlich innerhalb oder außerhalb dieser Toleranz liegt.

Die unterschiedlichen Umgebungsparameterwerte der unterschiedlichen Prüfsituationen werden dabei entsprechend berücksichtigt.

Darüber hinaus wird eine bessere Vergleichbarkeit über verschiedene Standorte und Prüfsituationen ermöglicht. Ein Mehraufwand durch eine schwierige Bewertung an Toleranzgrenzen und Bewertungsunsicherheiten an Toleranzgrenzen kann effektiv reduziert werden.

Gemäß einer Variante kann das neuronale Netz ein tiefes neuronales Netz sein. Diese Art eines neuronalen Netzes eignet sich besonders gut für eine Verarbeitung von optischen Daten oder Daten, die punkt-, linien-, oder flächenweise aufgenommen wurden. Das tiefe neuronale Netz kann außerdem in Form eines faltenden neuronalen Netzes implementiert sein.

Ein System zur Farbprüfung von Werkstücken hat in einer Variante:
- ein Bestimmungssystem;
- ein Speichersystem; und
- ein trainiertes Klassifikatorsystem.

Das Bestimmungssystem ist eingerichtet und bestimmt zum Ermitteln eines Satzes von Farbwerten eines Werkstückes, basierend auf erfassten Rohdaten eines Farbsensorsystems, wobei eine Farbdatenerfassung der erfassten Rohdaten hierbei einer Prüfsituation unterliegt, welche Einflussgrößen auf die Farbdatengewinnung mittels des Farbsensorsystems repräsentiert;
das Speichersystem ist eingerichtet und bestimmt zum Speichern des Satzes der Farbwerte in einem Datenspeicher, wobei dem Satz der Farbwerte die Prüfsituation zugeordnet ist; und/oder
das trainierte Klassifikatorsystem ist eingerichtet und bestimmt zum Klassifizieren des gespeicherten Satzes der Farbwerte mittels eines trainierten Klassifikators der zugehörigen Prüfsituation in mehrere disjunkte Qualitätsklassen, umfassend wenigstens eine A-Klasse, eine B-Klasse und eine C-Klasse, wobei der Klassifikator mittels Trainingsdaten trainiert wurde, um ein Klassifikationsmodell zu bilden, in dem zu bewertende Farbwerte im Verhältnis zu vorgegebenen Farbwerten einer von einer Mehrzahl vordefinierter Klassen zugeordnet sind.

Insbesondere bei Leitungen sind die unterschiedlichen Farben und vor allem die unterschiedlichen Leitungsquerschnitte eine Herausforderung. Die von mehreren Zehntel-Millimeter² (z. B. etwa 0,5 mm²) bis mehrere Millimeter² (z. B. etwa 10 mm²) reichenden Querschnitte der Leitungen bedeuten auch einen großen Bereich an Krümmungsänderung der zu prüfenden Leitungen. An diesen gekrümmten Flächen wird das Licht zur Beleuchtung der zu prüfenden Leitung unterschiedlich reflektiert, was sich auf die Farbtreue der erfassten Farbwerte auswirken kann. Diesen Nachteil kompensieren hier vorgestellte Varianten durch den Einsatz entsprechender Optiken (Vergrößerungslinsen, Spiegel, Polarisationsfilter, Lichtleiter, etc.). Dabei sind auch verstellbare Objektive im Einsatz, die auch abhängig vom Querschnitt der Leitungen zu verstellen sind. In einer Variante wird berücksichtigt, dass ein Polarisationsfilter wie ein Graufilter wirken kann, was zu veränderter Farbwahrnehmung führen kann.

Ein Computerprogrammprodukt zur Farbprüfung von Werkstücken hat ein computer-lesbares Speichermedium, welches darauf gespeicherte Programminstruktionen aufweist, wobei die Programminstruktionen durch einen oder mehrere Computer oder Steuereinheiten ausführbar sind und den einen oder die mehreren Computer oder Steuereinheiten dazu veranlasst, das obige Verfahren auszuführen.

Die hier vorgestellten Lösungen erlauben eine korrekte und zuverlässige Farberkennung mittels einer präzisen Farbmetrik und einem stabil arbeitenden opto-sensorischen Farbsensorsystem. Dies erlaubt die Umrechnung der erfassten Sensordaten zum Beispiel in den L^{∗}a^{∗}b^{∗}-Farbraum. Neben einer hohen Erkennungsgeschwindigkeit zeichnen sich diese Lösungen durch eine robuste und kompakte Bauweise aus. Dies erlaubt den Einsatz in direkter Produktionsnähe und bietet auch bei stark wechselnden Temperatur- und Umgebungslicht-Einflüssen hohe Zuverlässigkeit, ohne eine ständige Wartung und Nachjustierung zu erfordern und dennoch eine farbstabile Erkennung zu gewährleisten.

Eine qualitätsentscheidende Größe im Produktionsprozess ist die Farbe, daher müssen Farbtöne in verschiedenen Prozessschritten überwacht werden. Im Gegensatz zum menschlichen Auge erkennt die hier vorgestellte Lösung minimale Farbabweichungen, ggf. auch direkt im Produktionsprozess.

Die Farbe ist ein wesentliches Qualitätsmerkmal, insbesondere bei Kunststoffprodukten. Hier ist die visuelle Farbprüfung der Produkte durch einen Werker meist unzureichend. Die Automobilindustrie fordert zum Beispiel einen Farbabstand Delta-E von weniger als 0,1. Je nach Farbe liegt die Wahrnehmungsgrenze beim Menschen jedoch bei einem Delta-E zwischen 0,5 und 1. Die Genauigkeit einer Farbbestimmung durch den Menschen schwankt mit den natürlichen Gegebenheiten, der Tagesform und den Lichtverhältnissen. Die vorliegende Lösung kann feine Farbabgrenzungen wesentlich schneller und zuverlässiger detektieren. Ein frühzeitiges Erkennen fehlerhafter Materialfarben erspart erhebliche Ressourcen. Durch unmittelbares Nachsteuern von Prozessparametern kann Ausschuss auf ein Minimum reduziert werden.

Bei einer Farbmessung erfolgt ein Vergleich zwischen der gemessenen Farbe zur durch das menschliche Auge wahrgenommenen Farbe. Farbe hat ein reflektiertes Intensitätsspektrum im sichtbaren Wellenlängenbereich. Dieses Intensitätsspektrum ist neben der Farbe des Objekts abhängig von der Beleuchtung. Für die Beleuchtung sind unterschiedliche Lichtquellen eingesetzt, beispielsweise Glühlampe, Tageslicht, Leuchtstofflampen oder kaltweiße LED.

Als Farbsensorsystem kommt zum Beispiel ein Sony IMX477-Sensor (mit 12,3 Megapixel, 7,9 mm Sensordiagonale 1,55 µm x 1,55 µm Pixelfläche) mit entsprechender Optik zum Einsatz, der mit einem entsprechenden Prozessor verbunden ist, der zur Farbdatenerfassung und Auswertung eingerichtet und programmiert ist.

Für die Messung wird in einer Variante des Farbsensorsystems das von dem Objekt reflektierte Licht in spektrale Anteile zerlegt. Die einfachste Methode hierzu sind Filter, die jeweils nur einen Teil des Lichtspektrums durchlassen. So ist in einer Variante der Sensor des Farbsensorsystems in grüne, rote und blaue Pixel unterteilt. In einer anderen Variante wird das Objekt mit einer Lichtquelle beleuchtet, etwa mit Licht aus einer Weißlicht-LED. Das von dem Werkstück reflektierte Licht trifft auf den Sensor des Farbsensorsystems, der drei verschiedene Filter vor den lichtempfindlichen Sensorelementen hat. Die Absorptionsspektren der verwendeten Filter sind so gewählt, dass sich die Spektralbereiche überlappen. Die Filter teilen das Licht in lang-, mittel- und kurzwellige Anteile auf. Die Sensor-Signale der einzelnen Anteile werden dann rechnerisch in L^{∗}a^{∗}b^{∗}-Farbwerte transformiert. Der L^{∗}a^{∗}b^{∗}-Farbraum orientiert sich an den physiologischen Eigenschaften der menschlichen Farbwahrnehmung und nicht an physikalischen Messgrößen (Farbmetrik), ist standardisiert, gleichabständig und geräteunabhängig.

Dabei gilt L^{∗} = Helligkeit (0 = Schwarz, 100 = Weiß) a^{∗} = Rot - Grün (-128 = Grün, +127 = Rot) b^{∗} = Gelb - Blau (-128 = Blau, +127 = Gelb). Der L^{∗}a^{∗}b^{∗}-Farbraum erlaubt eine Einordnung der Farbe entsprechend der Farbwahrnehmung des menschlichen Auges. Die Sensoren dieser Variante dienen zur Erkennung minimaler Farbabweichungen. In einer Einlern-Phase wird die gewünschte Farbe anhand von akzeptablen Mustern (Goldstandard) eingelernt und zusätzlich eine maximal erlaubte Farbabweichung angegeben. Die Vorrichtung vergleicht im Betrieb die Farbe des Werkstücks und signalisiert beispielsweise über einen digitalen Ausgang, ob die Farbe des Werkstücks innerhalb des Toleranzbereichs liegt. Diese Methode der Farberkennung erlaubt eine schnelle und zuverlässige Detektion von mehreren hundert angelernten Farben mit besonders hoher Farbgenauigkeit.

Eine weitere Variante des Farbsensorsystems hat ein optisches Gitter, um das Spektrum des einfallenden Lichts, von dem beleuchteten Werkstück kommend, durch Brechung an dem Gitter in eine Vielzahl (zum Beispiel 256) Anteile aufzuspalten, die hinter dem Gitter auf eine CCD-Sensorzeile projiziert werden. Damit ist das komplette sichtbare Spektrum sehr genau mit einer hohen spektralen Auflösung (wenige nm) erfass- und auswertbar. Dieser Sensor liefert keinen Vergleich zu Referenzfarben, sondern kann einzelne Farben identifizieren; die Sensorsignale charakterisieren Koordinaten im Farbraum. Der Sensor hat in einer Variante wenigstens einen Lichtwellenleiter, um strukturierte, stark reflexive sowie glänzende Werkstücke abtasten zu können.

Einige chemische Verbindungen sind thermochrom. Deshalb ist die Temperatur des Werkstücks und der Mess-Umgebung relevant. Thermochromie ist reversibel, d.h. nach dem Abkühlen nimmt das Werkstück wieder seine ursprüngliche Farbe an. Grund für diese Farbveränderungen sind u. A. Änderungen in der Kristallstruktur. So ändern zum Beispiel Rutil und Zinkoxid ihre Farbe beim Erhitzen von weiß nach gelb. Auch bei organischen Verbindungen ist dieses Verhalten häufiger anzutreffen. Farbsensorsysteme der oben beschriebenen Art können die Farbe des Objekts mit hoher Genauigkeit im Produktionsprozess detektieren, obwohl der Effekt der Thermochromie zum Beispiel bei roten Farbstoffen sehr ausgeprägt ist.

Die Eigenschaften der verwendeten Lichtquelle zur Objektbeleuchtung haben maßgeblichen Einfluss auf die Erkennungsergebnisse. Eine Quelle einer normierten Lichtart (z.B. Lichtart D 65) wäre vorteilhaft, die keine Temperaturabhängigkeit sowie keine alterungsbedingten Veränderungen aufweist. Kompakte Bauform, hohe Lebensdauer und Lichtausbeute (Im/W) sind wesentlich. Zur Trennung von Fremdlicht aus der Messumgebung vom eigentlichen Messlicht kann letzteres in seiner Intensität moduliert werden. In einer Variante wird eine Hochleistungs-Weißlicht-LED eingesetzt. Diese haben meist eine im blauen Spektralbereich emittierende LED, die mit einer im gelben Spektralbereich fluoreszierenden Lichtkonversionsschicht überzogen ist, so dass weißes Licht resultiert. Zum Beispiel im Bereich von 380 - 420 nm können Spektralanteile fehlen, die für eine Detektion erforderlich sein können.

### Kurzbeschreibunq der Figuren

Weitere Merkmale, Eigenschaften, Vorteile und mögliche Abwandlungen werden für einen Fachmann anhand der nachstehenden Beschreibung deutlich, in der auf die beigefügten Figuren Bezug genommen ist. Dabei zeigen alle beschriebenen und/oder bildlich dargestellten Merkmale für sich oder in beliebiger Kombination die hier offenbarte Lösung. Bereits oben beschriebene Aspekte sowie zusätzliche Aspekte der vorliegenden Lösung ergeben sich unter anderem aus den beschriebenen Varianten und aus den zusätzlichen weiteren, durch Bezug auf die Figuren beschriebenen, konkreten Ausgestaltungen. Die Abmessungen und Proportionen der in den Figuren gezeigten Komponenten sind nicht maßstäblich. Varianten werden beispielhaft und mit Bezug auf die folgenden Figuren beschrieben:
Fig. 1 stellt ein Blockdiagramm eines Ausführungsbeispiels des erfinderischen Computer-implementierten Verfahrens zur Farbprüfung von Leitungen dar.
Fig. 2 stellt eine implementierungsnähere Version des vorgeschlagenen Verfahrens mit weiteren Details dar.

Begriffe wie 'aufweisen', 'umfassen' etc. schließen hier keine anderen Elemente oder Schritte aus, und Begriffe wie 'eine' oder 'ein' schließen keine Vielzahl aus. Bezugszeichen in den Ansprüchen sind nicht als Einschränkung anzusehen.

Weiterhin können Ausführungsformen mindestens teilweise in Form eines entsprechenden Computerprogrammproduktes implementiert sein, auf welches durch ein computer-nutzbares oder computer-lesbares Medium zugegriffen werden kann, welches Programmcode zur Nutzung durch oder in Verbindung mit einem Computer oder Instruktionsausführungssystem aufweist. Für den Kontext dieser Beschreibung kann ein computer-nutzbares oder computer-lesbares Medium jede Vorrichtung sein, die Mittel zum Speichern, Kommunizieren, Weiterleiten oder Transportieren des Programms für eine Nutzung durch oder mit einem Instruktionsausführungssystem, oder einer entsprechenden Vorrichtung aufweist.

Varianten sind hier mit Bezug auf unterschiedliche Implementierungskategorien beschrieben. Insbesondere sind einige Ausführungsbeispiele in Bezug auf ein Verfahren beschrieben, während andere Ausführungsbeispiele im Kontext von entsprechenden Vorrichtungen beschrieben sein können. Unabhängig davon ist es einem Fachmann möglich, aus der hier vorstehenden und nachfolgenden Beschreibung - wenn nicht anderweitig darauf hingewiesen - mögliche Kombinationen der Merkmale des Verfahrens sowie mögliche Merkmalskombinationen mit dem entsprechenden System zu erkennen und zu kombinieren, auch wenn sie zu unterschiedlichen Anspruchskategorien gehören.

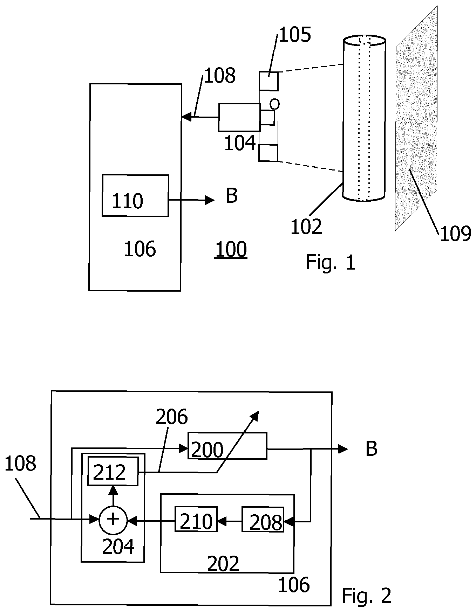

Fig. 1 zeigt ein Mess-System 100 zur Farbprüfung von Werkstücken oder Objekten 102, das ein Farbsensorsystem 104 zum Erfassen eines oder mehrerer Abschnitte von Werkstücken oder Objekten, hier von Leitungen 102, und eine Auswerteeinheit 106 zum Auswerten von durch das Farbsensorsystem 104 bereitgestellten Sensordaten 108 aufweist. Die Auswerteeinheit 106 umfasst hier einen Computer 110. Die Auswerteeinheit 106 ist dazu konfiguriert, um basierend auf den Sensordaten 108 mindestens ein Objekt 102 zu erkennen, mittels eines in der Auswerteeinheit 106 ausgeführten Algorithmus dessen Farbe zu klassifizieren und eine Bewertung B auszugeben. Diese Bewertung ist in einer Variante eine A-, B- oder C-Bewertung des geprüften Objekts in Bezug auf seine Farbe. In anderen Varianten wird eine quantitative Rückmeldung eines Maßes der Abweichung der Farbe des geprüften Objekts von einer erwarteten Farbe ausgegeben, die in einer weiteren Variante in den Produktionsprozess des Objektes zurück zu speisen ist. Die A-, B- oder C-Bewertung ist Ergebnis einer Klassifikation, wie sie unten im Detail erläutert ist.

In dieser Variante umfasst das Farbsensorsystem 104 eine Farbbildkamera zum Bereitstellen der Sensordaten 108. Das Objektiv O der Farbbildkamera hat eine Vergrößerungsoptik und ggf. ein Polarisationsfilter. Das Objektiv O ist von einer Hochleistungs-Weißlicht-LED-Anordnung 105 in Ringform umgeben.

Die Erkennung der Farbe der Leitung 102 erfolgt mithilfe eines Machine-Learning-Algorithmus, der in die Auswerteeinheit 106 implementiert ist, in einer Variante mithilfe eines künstlichen neuronalen Netzes. Ein entsprechendes Verfahren wird im Folgenden näher beschrieben.

In Fig. 2 ist beispielhaft ein detaillierter Aufbau der Auswerteeinheit 106 gezeigt. Die im Folgenden beschriebenen Module können Software- und/oder Hardwaremodule sein. Die Auswerteeinheit 106 umfasst ein Machine-Learning-Modul 200 zum Ausführen des Machine-Learning-Algorithmus, ein Prädiktionsmodul 202 zum Verarbeiten von Ausgaben des Machine-Learning-Moduls 200 und ein Vergleichsmodul 204 zum Verarbeiten von Ausgaben des Prädiktionsmoduls 202. In das Machine-Learning-Modul 200 und das Vergleichsmodul 204 gehen jeweils die von dem Farbsensorsystem 104 bereitgestellten Sensordaten 108 ein. Das Vergleichsmodul 204 ist konfiguriert, um basierend auf den Sensordaten 108 und den Ausgaben des Prädiktionsmoduls 202 Korrekturdaten 206 zum Korrigieren des Machine-Learning-Algorithmus bereitzustellen.

Alternativ ist es möglich, die Sensordaten 108 aufzunehmen und in ein die Auswerteeinheit 106 aufweisendes externes Computersystem einzugeben. Mit den Sensordaten 108 kann der Machine-Learning-Algorithmus, der von dem Machine-Learning-Modul 200 ausgeführt wird, dann von dem Computersystem in der beschriebenen Weise optimiert werden. Nach der Optimierung kann das Machine-Learning-Modul 200 in das Mess-System 100 eingebaut werden. Damit kann der optimierte Machine-Learning-Algorithmus im Mess-System 100 verwendet werden, ohne im Mess-System 100 trainiert werden zu müssen. In diesem Fall können beispielsweise die im Mess-System 100 integrierten Komponenten 202 bis 212 entfallen, da der Machine-Learning-Algorithmus bereits in dem außerhalb des Mess-System 100 befindlichen Computersystem trainiert wurde.

Zugrunde liegt eine Trainingssequenz mit nicht annotierten Sensordaten 108. Basierend auf den Sensordaten 108 aus dem Farbsensorsystem bestimmt das Machine-Learning-Modul 200 eine geschätzte Farbe der Leitung 102. Die Sensordaten 108 umfassen hierzu eine oder eine Mehrzahl zeitlich aufeinanderfolgender Messungen, die zu entsprechenden Messzeitpunkten mittels des Farbsensorsystems 104 durchgeführt wurden. Zur Bestimmung der geschätzten Farbe kann das Machine-Learning-Modul 200 auf alle der in den Sensordaten 108 enthaltenen Messungen oder auch nur auf eine Teilmenge davon zugreifen. Das Prädiktionsmodul 202 umfasst wenigstens eine Prädiktionseinheit 208, die konfiguriert ist, um eine Farbe der Leitung 102 zu prädizieren.

Des Weiteren umfasst in einer Variante das Prädiktionsmodul 202 wenigstens eine Transformationseinheit 210, die konfiguriert ist, um zukünftige Farben der Leitung 102 mithilfe entsprechender Sensormodelle in einen jeweiligen Messraum mehrerer Sensoreinheiten des Farbsensorsystems 104, darunter die Kamera, zu transformieren. Daraus resultieren transformierte zukünftige Leitungsfarben, die in das Vergleichsmodul 204 eingehen und dort mit entsprechenden Messungen verglichen werden.

Durch die Transformationseinheiten 210 können Messungen zu nachfolgenden Zeitpunkten als Trainingsdaten für den Machine-Learning-Algorithmus verwendet werden. Somit kann auf annotierte Sensordaten verzichtet werden. Aus dem Vergleich der transformierten zukünftigen Farben mit den zugehörigen Messungen resultieren eine Differenz, die in einer Gewichtungseinheit 212 des Vergleichsmoduls 204 mit einem Gewichtungsfaktor multipliziert wird. Die gewichtete Differenz wird in Form der Korrekturdaten 206 an das Machine-Learning-Modul 200 weitergereicht, um den Machine-Learning-Algorithmus und somit eine Schätzung der Farbe zu optimieren.

Eine Variante des computer-implementierten Verfahrens zur Farbprüfung - insbesondere der Farbe von Leitungen - weist ein Ermitteln, 1040, eines Satzes von Farbwerten auf. Typischerweise können drei (oder mehr) Messungen / Bildeinzüge von einem Abschnitt einer zu prüfenden Leitung 102 mit ihrem (neutralen) Hintergrund 109 vorgenommen und dann (zum Beispiel pixelweise) gemittelt werden. Der Satz von Farbwerten basiert auf in einer Prüfsituation gemessenen Rohdaten des Farbsensorsystems 104.

Eine Prüfsituation beschreibt dabei eine ganze Reihe von Umgebungsparameterwerten, unter deren Einfluss die Messung vorgenommen wurde; dazu gehören beispielsweise der Standort, an dem die Messung durchgeführt wird, der Sensortyp und ggf. zugehörige Trägersystem, Temperatur und Luftfeuchtigkeit während der Messung, usw. Zusätzlich können charakteristische Oberflächenparameterwerte der Leitung in die Prüfsituation einfließen; beispielsweise aus welchem Kunststoff die Oberfläche hergestellt ist, glänzend oder matt, etc. Letztlich sollten mindestens die wesentlichen Einflussgrößen in den Prüfsituations-Daten erfasst sein, die wichtige Einflussgrößen auf die Farbdatengewinnung mittels der Kamera 104 repräsentiert.

Das Verfahren weist weiterhin ein Speichern des Satzes der Farbwerte in einem Speicher auf, wobei dem Satz der Farbwerte die Prüfsituation zugeordnet ist. Dies kann mittels einer Kennung für die Daten der Prüfsituation gelöst sein.

Weiterhin weist das Verfahren ein Klassifizieren der Farbwerte - also der Werte, die die Farbe der Leitung charakterisieren, mittels des trainierten Klassifikators der zugehörigen Prüfsituation in eine von drei Klassen auf. Ein Einordnen der zu bewertenden Farbwerte in eine von hier verwendeten A-, B-, oder C-Klassen kann erfolgen in Abhängigkeit einer Entfernung E des ersten Satzes von einem ersten und/oder einem zweiten Schwellenwert S1 (= zum Beispiel 3), S2 (= zum Beispiel 6) relativ zu einem der vorgegebenen Farbwerte, wobei gilt:
Einordnung in A-Klasse: E < S1;
Einordnung in B-Klasse: S1 < E < S2; und
Einordnung in C-Klasse: E > S2.

Die Entfernung E ist der Abstand zweier Farben in einem Farbenraum. Die Entfernung E wird aus den Koordinaten zweier Farbstandorte in dem Farbenraum ermittelt. Damit können Unterschiede zwischen zwei Farben, die durch die menschliche Wahrnehmung empfunden, oder eben nicht mehr empfunden werden, mit numerischen Werten versehen werden.

Der erste Schwellenwert S1 ist mit 3 so gewählt, dass die Entfernung E des Satzes von dem ersten Schwellenwert S1 zu einem jeweiligen der vorgegebenen Farbwerte so gering ist, so dass der Unterschied durch das menschliche Auge nicht erkennbar ist; der erste und der zweite Schwellenwert S2 sind mit 3 bzw. 6 so gewählt, dass die Entfernung E des Satzes zu einem jeweiligen der vorgegebenen Farbwerte größer als der erste Schwellenwert S1, aber kleiner als der zweite Schwellenwert S2 ist, so dass der Unterschied durch das menschliche Auge nahezu nicht erkennbar ist, aber anhand der Trainingsdaten erkennbar ist; der zweite Schwellenwert S2 ist mit 6 so gewählt, dass die Entfernung E des Satzes zu einem jeweiligen der vorgegebenen Farbwerte größer als der zweite Schwellenwert S2 ist, so dass der Unterschied durch das menschliche Auge gut erkennbar ist.

Die Qualitätsklassen sind vorzugweise disjunkt, also nicht überlappend, und der Klassifikator wurde mittels annotierter Trainingsdaten trainiert, um ein Klassifikationsmodell zu bilden, um einen Farbwert einer von einer Mehrzahl von vordefinierten Farb-Klassen zuzuordnen.

Ein Computer 104 zur Ausführung des Verfahrens weist eine Mehrzahl von allgemein nutzbaren Funktionen auf. Dabei kann der Computer 104 ein Tablet-Computer, ein Laptop-/Notebook-Computer, ein anderes tragbares oder mobiles elektronisches Gerät, ein Mikroprozessorsystem, ein Mikroprozessor-basiertes System, oder Computersystem mit speziell eingerichteten Sonderfunktionen sein. Der Computer 104 kann eingerichtet sein zur Ausführung von vom Computer 104 ausführbaren Anweisungen - wie beispielsweise Programmmodulen - die ausgeführt werden können, um Funktionen der hier vorgeschlagenen Konzepte umzusetzen. Dazu können die Programmmodule Routinen, Programme, Objekte, Komponenten, Logik, Datenstrukturen usw. aufweisen, um bestimmte Aufgaben oder bestimmte abstrakte Datentypen zu implementieren. Der Computer 104 kann Folgendes aufweisen: einen oder mehrere Prozessoren oder Verarbeitungseinheiten, ein Speichersystem und ein Bussystem, welches verschiedene Systemkomponenten inklusive des Speichersystems mit dem Prozessor verbindet. Typischerweise hat das Speichersystem flüchtige oder nicht-flüchtige Speichermedien. Im Speichersystem können die Daten und/oder Instruktionen (Befehle) der Speichermedien in flüchtiger Form - wie beispielsweise in einem RAM - gespeichert sein, um von dem Prozessor ausgeführt zu werden. Diese Daten und Instruktionen realisieren einzelne oder mehrere Funktionen bzw. Schritte des hier vorgestellten Konzeptes. Weitere Komponenten des Speichersystems können ein Permanentspeicher und ein Langzeitspeicher sein, in dem die Programmmodule und Daten gespeichert sein können.

Der Computer 104 kann zur Kommunikation eine Reihe von dedizierten Vorrichtungen haben wie Tastatur, Maus, Bildschirm usw. Zur Kommunikation über ein lokales oder globales Netzwerk (beispielsweise über das Internet) steht ein Netzwerkadapter zur Verfügung. Auf den Netzwerkadapter kann durch andere Komponenten des Computersystems über das Bussystem zugegriffen werden. Darüber hinaus können mindestens Teile des Systems wie das Farbsensorsystem an das Bussystem angeschlossen sein.

Die dargestellten Strukturen, Materialien, Abläufe und Äquivalente aller Mittel und/oder Schritte mit zugehörigen Funktionen in den untenstehenden Ansprüchen sind dazu gedacht, alle Strukturen, Materialien oder Abläufe anzuwenden, wie es durch die Ansprüche ausgedrückt ist. Die vorangehend beschriebenen Varianten sowie deren Aufbauaspekte dienen lediglich dem besseren Verständnis der Struktur, der Funktionsweise und der Eigenschaften; sie schränken die Offenbarung nicht etwa auf die Ausführungsbeispiele ein. Die Figuren sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein computer-implementiertes Verfahren zur Farbqualitätsprüfung von Werkstücken umfasst, zum Beispiel in folgender Reihenfolge, die Schritte:
- Ermitteln eines Satzes von Farbwerten an der Oberfläche eines Werkstückes, basierend auf mittels eines Farbsensorsystems erfassten Rohdaten von der Oberfläche eines Werkstückes, wobei eine Farbdatenerfassung der erfassten Rohdaten hierbei einer Prüfsituation unterliegt, welche Einflussgrößen auf die Farbdatengewinnung mittels des Farbsensorsystems repräsentiert;
- Speichern des Satzes der ermittelten Farbwerte in einem Datenspeicher, wobei dem Satz der Farbwerte die Prüfsituation zugeordnet ist;
- Klassifizieren des gespeicherten Satzes der Farbwerte mittels eines trainierten Klassifikators der zugehörigen Prüfsituation in mehrere disjunkte Qualitätsklassen, wobei der Klassifikator mittels Trainingsdaten trainiert wurde, um ein Klassifikationsmodell zu bilden, in dem zu bewertende Farbwerte im Verhältnis zu vorgegebenen Farbwerten einer von mehreren vordefinierten Klassen zugeordnet sind.

2. Das computer-implementierte Verfahren zur Farbqualitätsprüfung von Werkstücken nach Anspruch 1 umfasst ein Einordnen der zu bewertenden Farbwerte in eine A-, B-, und C-Klasse in Abhängigkeit einer Entfernung E des Satzes von einem ersten und/ oder einem zweiten Schwellenwert S1, S2 relativ zu einem der vorgegebenen Farbwerte, wobei gilt:
Einordnung in A-Klasse: E < S1;
Einordnung in B-Klasse: S1 < E < S2; und
Einordnung in C-Klasse: E > S2.

3. Das computer-implementierte Verfahren zur Farbqualitätsprüfung von Werkstücken nach Anspruch 2, bei dem
- der erste Schwellenwert S1 so gewählt ist, dass die Entfernung E des Satzes der Farbwerte von dem ersten Schwellenwert S1 zu einem jeweiligen der vorgegebenen Farbwerte so gering ist, so dass der Unterschied als durch das menschliche Auge nicht erkennbar eingeordnet ist;
- der erste und der zweite Schwellenwert S2 so gewählt sind, dass die Entfernung E des Satzes der Farbwerte zu einem jeweiligen der vorgegebenen Farbwerte größer als der erste Schwellenwert S1, aber kleiner als der zweite Schwellenwert S2 ist, so dass der Unterschied als durch das menschliche Auge nahezu nicht erkennbar eingeordnet ist, aber anhand der Trainingsdaten erkennbar ist; und/oder
- der zweite Schwellenwert S2 gewählt ist, dass die Entfernung E des Satzes der Farbwerte zu einem jeweiligen der vorgegebenen Farbwerte größer als der zweite Schwellenwert S2 ist, so dass der Unterschied als durch das menschliche Auge gut erkennbar eingeordnet ist.

4. Das computer-implementierte Verfahren zur Farbqualitätsprüfung von Werkstücken nach Anspruch 1, 2 oder 3, bei dem
- der Klassifikator ausgewählt ist aus der Gruppe umfassend neuronales Netz, tiefes neuronales Netz, faltendes neuronales Netz, k-nächster Nachbar, Stützvektormaschine, Entscheidungsbaum, Random Forest, Boosting, Gradient Boosting, und Gaussian Process, Bayes, Multilayer-Perceptron, rückgekoppeltes neuronales Netz, Long-/Short-term Memory Network, oder eine Kombination aus mindestens zwei der genannten Klassifikatoren.

5. Das computer-implementierte Verfahren zur Farbqualitätsprüfung von Werkstücken nach einem der Ansprüche 1 bis 4, bei dem
- der Klassifikator vorab dazu konfiguriert ist, Farben von Objekten, zum Beispiel Leitungen basierend auf den Sensordaten zu schätzen; und/oder, sofern der Klassifikator ein künstliches neuronales Netz ist, die Abweichungen dazu verwendet werden, Gewichtungen von Neuronenverbindungen des Netzes durch Backpropagation schrittweise zu korrigieren, um das Netz in einem überwachten Lernverfahren zu trainieren, indem die Fehler des Netzes von einer Ausgabeschicht des Netzes zurück zu einer Eingabeschicht des Netzes propagiert und die Gewichtungen abhängig von ihrem jeweiligen Einfluss auf die Fehler so geändert werden, dass eine Ausgabe des Netzes in einem späteren Zeitschritt näher an einer gewünschten Ausgabe liegt, als in einem aktuellen Zeitschritt.

6. Das computer-implementierte Verfahren zur Farbqualitätsprüfung von Werkstücken nach einem der Ansprüche 1 bis 5, bei dem
- als Farbsensorsystem wenigstens ein optischer Sensor verwendet wird, der dazu bestimmt und eingerichtet ist, ein- oder zweidimensionale Rohdaten aufzunehmen.

7. Das computer-implementierte Verfahren zur Farbqualitätsprüfung von Werkstücken nach Anspruch 6, bei dem
- zur Schätzung der Werkstückfarbe Daten eines oder mehrerer Sensoren gleicher oder unterschiedlicher Art verarbeitet werden; und/oder
- zur Schätzung der Werkstückfarbe Unsicherheiten oder Ungenauigkeiten bezüglich der Messungen sowie Falsch- und Fehldetektionen berücksichtigt werden; und/oder
- die Rohdaten optisch ermittelte Linien- oder Flächenparameter, in vorbestimmte Frequenzbänder transformierte Profildaten, und/oder Parameter basierend auf Mustererkennung umfassen.

8. Das computer-implementierte Verfahren zur Farbqualitätsprüfung von Werkstücken nach einem der Ansprüche 1 bis 7, bei dem
- Umgebungsparameter einer aktuellen Prüfsituation (i) einen Standort, (ii) Eigenschaften des Farbsensorsystems, wie Auflösung, Farbspektrum und Farbtiefe, (iv) Temperatur des Werkstücks und/oder der Umgebung, (v) Luftfeuchtigkeit, und/oder (vi) Messgeschwindigkeit, ermittelt und zusammen mit den Rohdaten bei der Klassifizierung berücksichtigt werden.

9. Ein System zur Farbprüfung von Werkstücken umfasst:
- ein Bestimmungssystem;
- ein Speichersystem; und
- ein trainiertes Klassifikatorsystem; wobei
- das Bestimmungssystem eingerichtet und bestimmt ist zum Ermitteln eines Satzes von Farbwerten an der Oberfläche eines Werkstückes, basierend auf mittels eines Farbsensorsystems erfassten Rohdaten von der Oberfläche eines Werkstückes, wobei eine Farbdatenerfassung der erfassten Rohdaten hierbei einer Prüfsituation unterliegt, welche Einflussgrößen auf die Farbdatengewinnung mittels des Farbsensorsystems repräsentiert;
- das Speichersystem eingerichtet und bestimmt ist zum Speichern des Satzes der Farbwerte in einem Datenspeicher, wobei dem Satz der Farbwerte die Prüfsituation zugeordnet ist; und/oder
- das trainierte Klassifikatorsystem eingerichtet und bestimmt ist zum Klassifizieren des gespeicherten Satzes der Farbwerte mittels eines trainierten Klassifikators der zugehörigen Prüfsituation in mehrere disjunkte Qualitätsklassen, wobei der Klassifikator mittels Trainingsdaten trainiert wurde, um ein Klassifikationsmodell zu bilden, in dem zu bewertende Farbwerte im Verhältnis zu vorgegebenen Farbwerten einer von mehreren vordefinierten Klassen zugeordnet sind.

10. Das System zur Farbprüfung von Werkstücken nach Anspruch 9 umfasst
- ein Farbsensorsystem mit zugeordneter Optik, insbesondere Vergrößerungslinsen, Polarisationsfilter, Lichtleiter, verstellbare Objektive; und/oder
- ein Farbsensorsystem mit einer Farbkamera, die mit einem Prozessor verbunden ist, der zur Farbdatenerfassung und/oder -Auswertung eingerichtet und programmiert ist; und/oder
- ein Farbsensorsystem, das wenigstens einen Filter umfasst, der nur einen Teil des Lichtspektrums durchlässt und von dem Werkstück reflektiertes Licht in spektrale Anteile zerlegt; und/oder
- ein Farbsensorsystem, bei dem eine Lichtquelle zum Beleuchten des Werkstücks vorgesehen ist, und das von dem Werkstück reflektierte Licht auf den Sensor trifft, der drei verschiedene Filter vor lichtempfindlichen Sensorelementen aufweist, wobei die Filter das Licht in lang-, mittel- und kurzwellige Anteile aufteilt und eine nachgeschaltete Rechnereinheit Signale aus den Sensorelementen der einzelnen Anteile in L^{∗}a^{∗}b^{∗}-Farbwerte transformiert.

11. Das System zur Farbprüfung von Werkstücken nach einem der Ansprüche 9 bis 13, wobei das eintrainierte Klassifikatorsystem in einer Einlern-Phase wenigstens eine gewünschte Farbe anhand von Bildeinzügen von (i) In-Ordnung-, (ii) Nicht-In-Ordnung- und/oder (iii) Gold-Standard-Mustern und ggf. eine maximal erlaubte Farbabweichung einlernt; und/oder im Betrieb die Farbe des Objekts mit den Mustern vergleicht und über einen digitalen Ausgang signalisiert, ob die Farbe des Objekts (i) In-Ordnung, (ii) Nicht-In-Ordnung und/oder (iii) einem Gold-Standard entspricht, sowie ggf. innerhalb des Toleranzbereichs liegt.

12. Das System zur Farbprüfung von Werkstücken nach Anspruch 9 oder 10 umfasst ein Farbsensorsystem, das eine auf das Objekt gerichtete Lichtquelle und ein optisches Gitter aufweist, um das Spektrum des einfallenden Lichts, von dem beleuchteten Objekt kommend, durch Brechung an dem Gitter in eine Vielzahl Anteile aufzuspalten, die hinter dem Gitter auf eine Sensorzeile projiziert werden.

13. Ein Computerprogrammprodukt zur Farbprüfung von Werkstücken umfasst ein computer-lesbares Speichermedium, welches darauf gespeicherte Programminstruktionen aufweist, wobei die Programminstruktionen durch einen oder mehrere Computer oder Steuereinheiten ausführbar sind und den einen oder die mehreren Computer oder Steuereinheiten dazu veranlassen, das Verfahren nach einem der Ansprüche 1 - 8 auszuführen.
